# FASCICULE DE BREVET EUROPEEN

(11) **EP 1 315 440 B1**
(45) Date de publication et mention de la délivrance du brevet: **07.09.2005**
(21) Numéro de dépôt: 01969848.9
(22) Date de dépôt: 03.09.2001
(51) Int. Cl.: A47J 45/10

(54) **DISPOSITIF AMOVIBLE POUR SAISIR, SOULEVER, MANIPULER ET VERSER DES USTENSILES DE CUISSON AYANT DEUX ANSES**
ENTFERNBARER TRAGEGRIFF FÜR EINEN KOCHBEHÄLTER MIT ZWEI HANDGRIFFEN
DETACHABLE DEVICE FOR GRIPPING, LIFTING, HANDLING AND TILTING COOKING UTENSILS WITH TWO HANDLES

(30) Priorité: 04.09.2000 FR 0011224
(43) Date de publication de la demande: 04.06.2003
(73) Titulaire: CRISTEL, 25490 Fesches le Chatel (FR)
(72) Inventeur: DODANE, Paul, F-25400 Exincourt (FR)
(74) Mandataire: Le Bras, Hervé
(86) Numéro de dépôt international: PCT/FR2001/002726
(87) Numéro de publication internationale: WO 2002/019882

(56) Documents cités:
- FR-A- 1 361 405
- US-A- 1 364 552
- US-A- 2 106 391
- US-A- 4 206 853

## Description

L'invention concerne un dispositif amovible pour saisir, soulever, manipuler et verser des ustensiles de cuisson ayant deux anses diamétralement opposées et recourbées vers l'extérieur et dans chacune desquelles est ménagée une lumière sensiblement parallèle au bord interne de ladite anse.

La lumière d'une anse est destinée à coopérer avec un bec à double cambrure d'un manche amovible qui comporte un crochet coopérant avec le rebord de l'anse. L'ustensile est alors utilisé en tant que casserole ayant un manche amovible. La deuxième anse ne sert alors à rien.

L'ustensile peut également être utilisé en tant que marmite à deux anses pour la cuisson d'aliments sur un feu ou dans un four. Les anses étant métalliques, elles peuvent provoquer des brûlures sérieuses, si, avec les mains nues, l'on saisit ou soulève l'ustensile chaud par les anses. L'utilisation d'un manche amovible pour soulever un ustensile de cuisson chaud peut s'avérer également dangereux, si l'ustensile contient une grande quantité d'aliments, car le couple à exercer sur le manche peut être supérieur au couple maximum que certaines personnes peuvent produire.

C'est pourquoi il peut être utile de pouvoir agripper les anses des deux mains sans se brûler. Ceci se fait en général en utilisant des gants de protection thermique.

FR A 2 416 677 a proposé des anses comportant des poignées aisément amovibles et isolées à la chaleur pour manipuler des ustensiles de cuisson. Les anses proposées présentent un profil avec une largeur croissant vers l'extérieur et les poignées comportent des rainures avec un profil correspondant, ces rainures et la partie associée de chaque anse s'étendant en arc de cercle en direction longitudinale, de préférence dans un plan horizontal de l'objet. De préférence les rainures des poignées et la partie de l'anse coopérant avec elles sont en forme de queue d'aronde. Dans ce document, il n'est prévu aucun moyen pour verrouiller les poignées sur les anses, et lesdites anses ne peuvent pas être utilisées pour accrocher des manches amovibles.

L'invention a pour but de proposer un dispositif qui permette de protéger efficacement et avec sécurité les mains d'un utilisateur qui saisit ou soulève un ustensile de cuisine chaud par les anses.

L'invention atteint son but par le fait que le dispositif comporte une paire de coquilles amovibles, susceptibles de coiffer lesdites anses et réalisées en un matériau thermiquement isolant, chaque coquille présentant une cavité interne qui débouche latéralement par un orifice oblong et qui est susceptible de loger une anse introduite par ledit orifice, et étant équipée d'un dispositif de verrouillage/ déverrouillage interne susceptible de coopérer avec la lumière de l'anse logeant dans ladite cavité.

Avantageusement le dispositif de verrouillage/déverrouillage comporte une plaque montée basculante autour d'un axe de pivotement parallèle à l'orifice oblong et logeant dans une chambre de débattement ménagée dans la coquille correspondante et adaptée pour permettre le basculement de la plaque entre une position de verrouillage et une position de déverrouillage, l'une des extrémités de ladite plaque comportant un bec retourné susceptible de loger dans la lumière de l'anse coiffée par la coquille correspondante dans la position de verrouillage de ladite plaque, et l'autre extrémité de ladite plaque étant accessible à l'utilisateur pour lui permettre de basculer ladite plaque dans la position de déverrouillage afin d'escamoter ledit bec en exerçant une pression manuelle sur ladite autre extrémité à l'encontre du couple exercé par des moyens élastiques qui tendent à basculer ladite plaque vers la position de verrouillage.

La chambre de débattement comporte de préférence une zone avant débouchant au-dessus de la partie médiane de la cavité et une zone arrière débouchant dans un orifice traversant ménagé dans la coquille correspondante sensiblement perpendiculairement à la plaque, et dans lequel est disposée l'autre extrémité de la plaque, étant éloignée de la chaleur, commandable au travers de l'orifice et ne créant aucune protubérance sur la coquille.

Avantageusement les moyens élastiques comportent un ressort en appui sur la plaque et en appui dans le fond d'un logement débouchant dans la zon²e avant de la chambre de débattement de la plaque.

De préférence, le bec est disposé dans la partie médiane de l'orifice oblong dans la position de verrouillage de la plaque. Ce bec comporte sur sa face avant un chanfrein qui permet l'escamotage dudit bec lors de la mise en place de la coquille sur une anse.

D'autres avantages et caractéristiques de l'invention ressortiront à la lecture de la description suivante faite à titre d'exemple et en référence aux dessins annexés dans lesquels :
la figure 1 est une coupe longitudinale, selon un plan de symétrie vertical, d'une coquille du dispositif selon l'invention en position verrouillée sur une anse d'un ustensile de cuisson ;
la figure 2 est une coupe par un plan horizontal selon la ligne II-II de la figure 1 ;

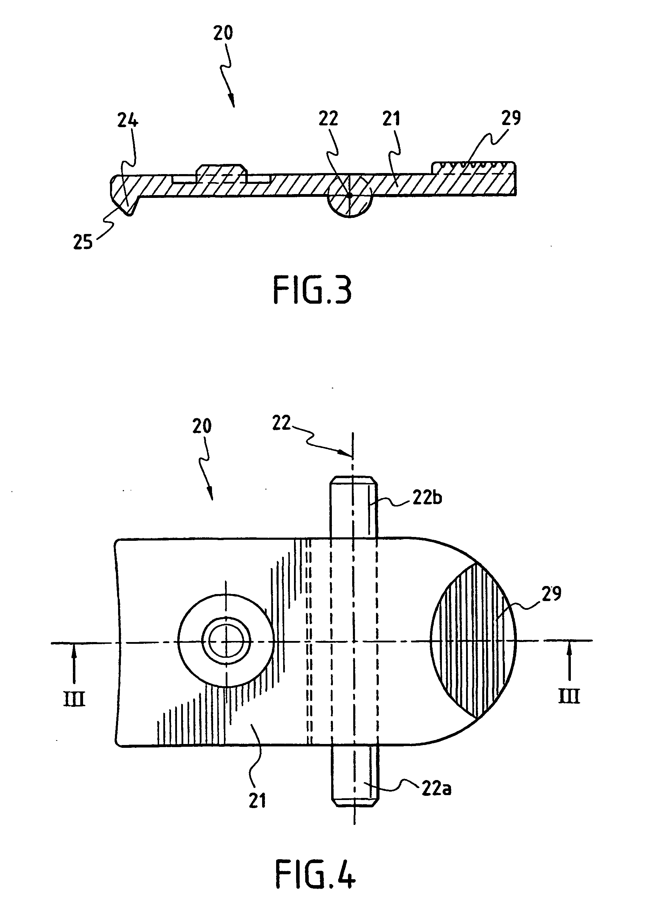

la figure 3 est une coupe longitudinale, selon un plan de symétrie vertical, de la plaque du dispositif de verrouillage/ déverrouillage ;
la figure 4 est une vue de dessus de la plaque de la figure 3 ; et
la figure 5 est une vue éclatée d'une coquille du dispositif selon l'invention.

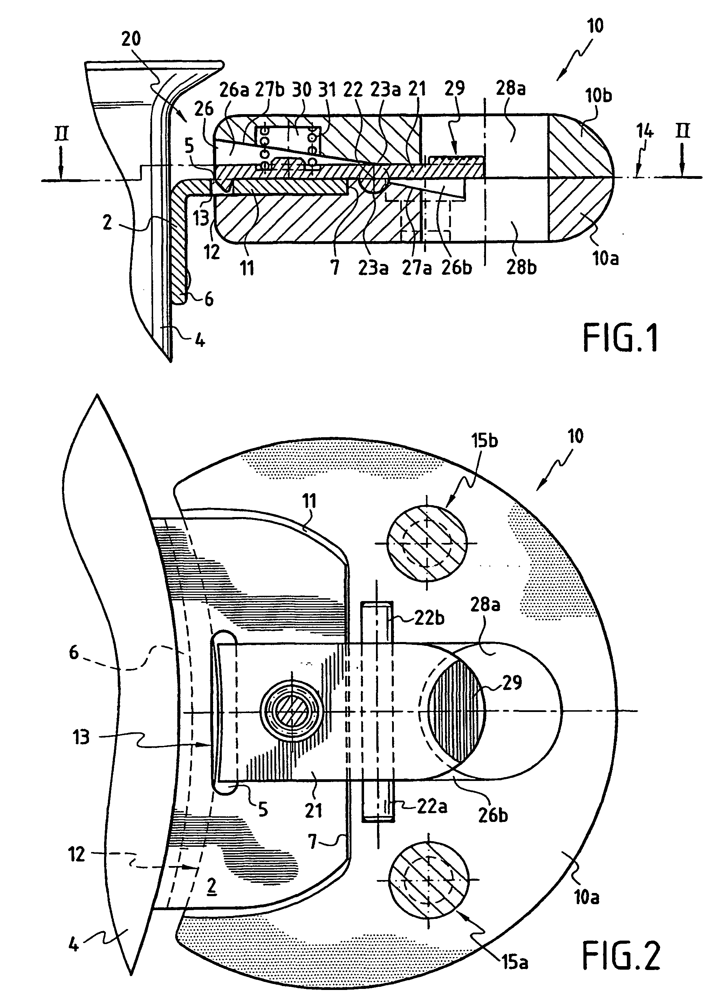

Les figures 1 et 2 montrent une anse 2 d'un ustensile de cuisson, dont seule une partie périphérique 4 est montrée et qui comporte deux anses 2 semblables diamétralement opposées. Chaque anse 2, réalisée en métal, comporte une lumière 5 sensiblement parallèle à son bord interne 6 fixé sur la paroi latérale de l'ustensile. Chaque anse 2 s'étend vers l'extérieur de l'ustensile, sensiblement à l'horizontale et présente un bord externe 7 sensiblement parallèle au bord externe 6.

Pour pouvoir saisir et soulever l'ustensile de cuisson chaud par ses deux anses 2, l'invention prévoit deux coquilles 10 réalisées en un matériau thermiquement isolant, qui sont amovibles et qui sont susceptibles chacune de coiffer l'une des anses 2.

Chaque coquille 10, qui a une section horizontale et une épaisseur nettement supérieures à la section horizontale et à l'épaisseur d'une anse 2, comporte une cavité interne 11, qui débouche sur la face latérale 12 avant de la coquille 10, face dirigée lors de l'utilisation vers le bord interne 6 de l'anse 2, par un orifice oblong 13. Les dimensions de la cavité interne 11 sont telles que lorsqu'on y introduit l'anse 2 par l'orifice oblong 13, l'anse 2 loge sans jeu notable dans la cavité 11, et sur sa plus grande étendue, afin de protéger efficacement les mains d'un utilisateur soulevant l'ustensile de cuisson par les coquilles 10 coiffant les anses 2. Dans cette position normale d'utilisation, la lumière 5 loge également, presque en totalité, dans la cavité 11.

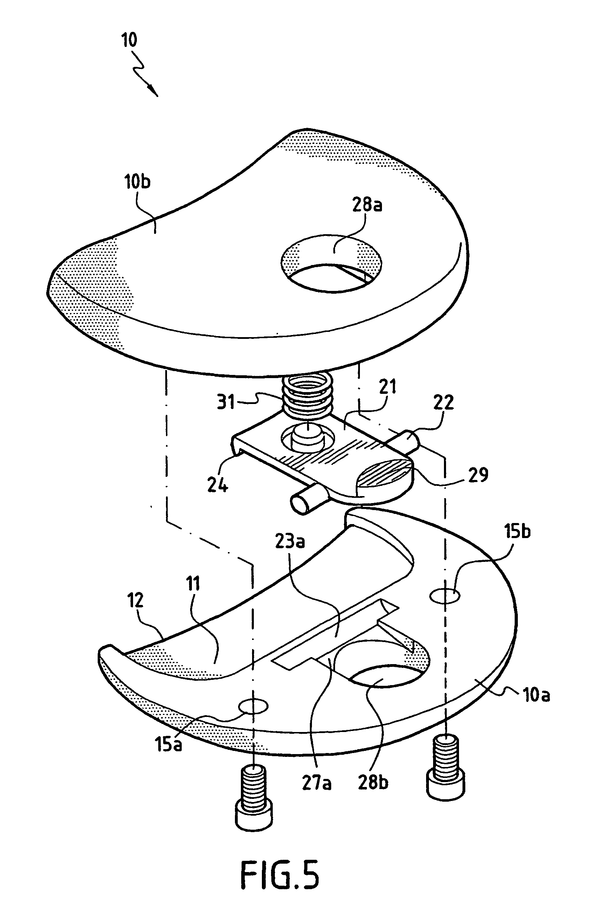

La coquille 10 est réalisée en deux pièces jointives selon un plan de joint horizontal sensiblement médian 14 qui contient la paroi supérieure délimitant la cavité interne 11. Ainsi que cela se voit sur la figure 5, la coquille 10 est réalisée par assemblage d'une coque inférieure 10a, dans laquelle est ménagée la cavité 11, et d'une coque supérieure 10b. La coque inférieure présente des trous traversant 15a, 15b qui permettent le passage de vis de fixation, dont les filetages coopèrent avec des taraudages formés dans la coque supérieure 10b.

La coquille 10 comporte en outre dans son épaisseur un dispositif de verrouillage/déverrouillage 20. Ce dispositif comporte essentiellement une plaque rigide 21 solidaire d'un axe de pivotement transversal 22 dont les extrémités 22a et 22b émergent latéralement de la plaque rigide 21 afin de constituer des paliers de pivotement.

L'axe de pivotement transversal 22 loge dans deux gorges semi-cylindriques 23a, formées en regard dans les coques 10a et 10b et débouchant dans la plan de joint 14. Seule la gorge 23a de la coque inférieure 10a est visible sur la figure 5. Lorsque les deux coques 10a et 10b sont assemblées, les deux gorges semi-cylindriques constituent le logement de l'axe de pivotement 22 qui est alors parallèle à l'orifice oblong 13. Ainsi que cela est visible sur les figures 1 et 5, la gorge 23a est disposée à l'arrière de la cavité 11, l'avant et l'arrière étant définis par rapport à la face latérale avant 12 dirigée vers l'ustensile de cuisson.

La plaque 21 comporte à son extrémité avant un bec 24 recourbé vers le bas et qui présente sur sa face avant un chanfrein 25. Ce bec 24 est destiné à pénétrer dans la lumière 5 de l'anse 2 lorsque la coquille 10 coiffe ladite anse 2.

Pour permettre le pivotement de la plaque 21 autour de son axe de pivotement transversal 22, il est prévu, dans la coquille 10, une chambre de débattement 26 dans laquelle loge la plaque 21.

La zone avant 26a de la chambre de débattement 26 est ménagée dans la coque supérieure 10b. Cette zone avant 26a débouche au-dessus de la zone médiane de la cavité 11 et elle est délimitée notamment par deux parois qui divergent à partir de l'axe de pivotement 22, l'une de ces parois étant la face supérieure de la coque inférieure 10a, et l'autre paroi 27b étant formée dans la coque supérieure 10b.

La zone arrière 26b de la chambre de débattement est ménagée dans la coque inférieure 10a, et la coque supérieure 10b. Elle est délimitée par un plan de joint 14 et une paroi oblique 27a formée dans la coque inférieure 10a.

Les deux coques 10a et 10b comportent en vis-à-vis des trous traversant 28a, 28b alignés, dans lesquels débouche la zone arrière 26b et dans lesquels est disposée l'extrémité arrière 29 de la plaque 21.

La coque supérieure 10b comporte en outre un logement 30 qui débouche dans la zone avant 26a de la chambre de débattement. Le fond de ce logement sert d'appui à une extrémité d'un ressort de compression 31 dont l'autre extrémité est en appui sur la face supérieure avant de la plaque 21.

Le ressort de compression 31 tend à rappeler la plaque 21 vers la position de verrouillage. Dans cette position de verrouillage, le bec 24 loge dans la lumière 5 de l'anse 2, qui elle loge dans la cavité 11. L'extrémité arrière 29 constituant un organe de commande, pour déverrouiller le dispositif 20, l'utilisateur appuie sur ladite extrémité 29 de la plaque 21 en introduisant son pouce dans le trou supérieur 28a de la coque supérieure 10a. Il exerce une force suffisante pour contrebalancer la force du ressort de compression 31. La plaque 21 qui était au départ parallèle au plan de joint 14 bascule autour de l'axe 22 et vient en appui contre les parois obliques 27a et 27b, le bec 24 s'escamote alors dans la zone avant 26a de la chambre de débattement 26. Les deux coquilles 10 peuvent alors être retirées en exerçant sur elles un légère force radiale vers l'extérieur, soit ensemble soit séparément. L'extrémité 29 étant située à l'intérieur des trous 28a et 28b, le plus éloigné de la chaleur, même en position verrouillée, ladite extrémité 29 ne crée aucune protubérance pour la main qui a toute la place, et le risque de déverrouillage intempestif est évité. En outre, le risque pour qu'un enfant déverrouille une coquille de manière intentionnelle ou accidentelle est lui aussi écarté.

La mise en place des coquilles 10 se fait selon le cheminement inverse. Le bec 24 peut d'abord être escamoté dans la zone avant 26a de la chambre de débattement 26 en exerçant avec le pouce une force dirigée vers le bas sur l'extrémité 29. Mais si la plaque 21 est dans la position de verrouillage avant d'introduire le bord externe 7 de l'anse 2 dans l'orifice oblong 13, ce bord externe 7 coopérera avec le chanfrein 25, pour basculer la plaque 21 afin de permettre l'introduction de l'anse 2 dans la cavité 11.

Les coques 10a et 10b sont réalisées par moulage d'un matériau isolant thermodurcissable.

Le montage d'une coquille 10 est simple : on place la plaque 21 sur la coquille inférieure 10a, puis on positionne le ressort 31, on coiffe le tout avec la coque supérieure 10b et on réunit les deux coques 10a et 10b au moyen de vis traversant les trous 15a et 15b.

La zone avant 26a et la zone arrière 26b de la chambre de débattement 26 sont délimitées à partir de l'axe de pivotement 22 par des surfaces divergentes 14, 27a, 27b.

En fait, la chambre de débattement 26 est délimitée dans sa zone avant 26a par les surfaces divergentes qui sont composées du plan de joint horizontal 14 et de la paroi oblique 27a.

De même, la chambre de débattement 26 est délimitée dans sa zone arrière 26b par les surfaces divergentes qui sont composées du plan de joint horizontal 14 et de la paroi oblique 27b.

## Revendications

1. Dispositif amovible pour saisir, soulever, manipuler et verser des ustensiles de cuisson ayant deux anses (2) diamétralement opposées et recourbées vers l'extérieur et dans chacune desquelles est ménagée une lumière (5) sensiblement parallèle au bord interne (6) de ladite anse (2), ledit dispositif comportant une paire de coquilles (10) amovibles, susceptibles de coiffer lesdites anses (2) et réalisées en un matériau thermiquement isolant, chaque coquille (10) présentant une cavité interne (11) qui débouche latéralement par un orifice oblong (13) et qui est susceptible de loger une anse (2) introduite par ledit orifice, **caractérisé en ce que** chaque coquille est équipée d'un dispositif de verrouillage/ déverrouillage interne (20) susceptible de coopérer avec la lumière (5) de l'anse (2) logeant dans ladite cavité (11).

2. Dispositif selon la revendication 1, **caractérisé par le fait que** le dispositif de verrouillage/déverrouillage (20) comporte une plaque (21) montée basculante autour d'un axe de pivotement (22) parallèle à l'orifice oblong (13) et logeant dans une chambre de débattement (26) ménagée dans la coquille (10) correspondante et adaptée pour permettre le basculement de la plaque (21) entre une position de verrouillage et une position de déverrouillage, l'une des extrémités de ladite plaque comportant un bec (24) retourné susceptible de loger dans la lumière (5) de l'anse (2) coiffée par la coquille (10) correspondante dans la position de verrouillage de ladite plaque (21), et l'autre extrémité (29) de ladite plaque (21) étant accessible à l'utilisateur pour lui permettre de basculer ladite plaque (21) dans la position de déverrouillage afin d'escamoter ledit bec (24) en exerçant une pression manuelle sur ladite autre extrémité (29) à l'encontre du couple exercé par des moyens élastiques (31) qui tendent à basculer ladite plaque (21) vers la position de verrouillage.

3. Dispositif selon la revendication 2, **caractérisé par le fait que** la chambre de débattement (26) de la plaque (21) comporte une zone avant (26a) débouchant au-dessus de la partie médiane de la cavité (11) et une zone arrière (26b) débouchant dans un orifice (28a, 28b) traversant ménagé dans la coquille (10) correspondante sensiblement perpendiculairement à la plaque (21), et dans lequel est disposée l'autre extrémité (29) de la plaque (21), étant éloignée de la chaleur, commandable au travers de l'orifice (28a) et ne créant aucune protubérance sur la coquille (10).

4. Dispositif selon la revendication 3, **caractérisé par le fait que** l'axe de pivotement (22) est situé à l'arrière de la cavité (11) susceptible de loger une anse (2).

5. Dispositif selon la revendication 4, **caractérisé par le fait que** la zone avant (26a) et la zone arrière (26b) de la chambre de débattement (26) sont délimitées à partir de l'axe de pivotement (22) par des surfaces divergentes (14, 27a, 27b).

6. Dispositif selon l'une quelconque des revendications 3 à 5, **caractérisé par le fait que** les moyens élastiques comportent un ressort (31) en appui sur la plaque (21) et en appui dans le fond d'un logement (30) débouchant dans la zone avant (26a) de la chambre de débattement (26) de la plaque (21).

7. Dispositif selon l'une quelconque des revendications 2 à 6, **caractérisé par le fait que** dans la position de verrouillage de la plaque (21) le bec (24) est disposé dans la partie médiane de l'orifice oblong (13).

8. Dispositif selon l'une quelconque des revendications 2 à 6, **caractérisé par le fait que** le bec (24) comporte sur sa face avant un chanfrein (25) qui permet l'escamotage dudit bec (24) lors de la mise en place de la coquille (10) sur une anse (2).

9. Dispositif selon l'une quelconque des revendications 1 à 8, **caractérisé par le fait que** chaque coquille (10) est réalisée en deux morceaux (10a, 10b) jointifs selon un plan de joint (14) contenant l'axe géométrique de pivotement de la plaque (21).

## Patentansprüche

1. Abnehmbare Vorrichtung zum Greifen, Heben, Handhaben und Kippen von Kochgeschirr mit zwei diametral gegenüberliegenden und nach außen gekrümmten Haltegriffen (2), bei denen in jedem ein Langloch (5) angebracht ist, das im Wesentlichen parallel zum inneren Rand (6) des Haltegriffs (2) verläuft, wobei die Vorrichtung ein Paar abnehmbare Schalen (10) aufweist, die die Haltegriffe (2) bedecken können und aus einem wärmeisolierenden Material hergestellt sind, wobei jede Schale (10) eine innere Vertiefung (11) aufweist, die seitlich durch eine Längsöffnung (13) endet und einen Haltegriff (2) aufnehmen kann, der durch die Öffnung eingeführt wurde, **dadurch gekennzeichnet, dass** jede Schale mit einer inneren Vorrichtung zum Verriegeln/Entriegeln (20) ausgestattet ist, die mit dem Längsloch (5) des Haltegriffs (2), der in der Vertiefung (11) liegt, zusammenwirken kann.

2. Vorrichtung nach Anspruch 1, **dadurch gekennzeichnet, dass** die Vorrichtung zum Verriegeln/Entriegeln (20) eine Platte (21) aufweist, die verkippbar um eine Drehachse (22) parallel zur Längsöffnung (13) angebracht ist und in einer Federungskammer (26) liegt, die in der zugehörigen Schale (10) angebracht und so angepasst ist, dass sie das Verkippen der Platte (21) zwischen einer Verriegelungsstellung und einer Entriegelungsstellung ermöglicht, wobei eines der Enden der Platte eine umgekehrte Spitze (24) aufweist, die in dem Längsloch (5) des Haltegriffs (2) liegen kann, der durch die zugehörige Schale (10) in der Verriegelungsstellung der Platte (21) bedeckt ist, und das andere Ende (29) der Platte (21) dem Benutzer zugänglich ist, um ihm das Verkippen der Platte (21) in die Entriegelungsstellung zu ermöglichen, um die Spitze (24) einzuziehen, indem ein manueller Druck auf das andere Ende (29) gegen das Moment ausgeübt wird, das durch elastische Mittel (31) ausgeübt wird, die die Tendenz haben, die Platte (21) in die Verriegelungsstellung zu verkippen.

3. Vorrichtung nach Anspruch 2, **dadurch gekennzeichnet, dass** die Federungskammer (26) der Platte (21) einen vorderen Bereich (26a), der über dem mittleren Teil der Vertiefung (11) endet und einen hinteren Bereich (26b) aufweist, der in einer Queröffnung (28a, 28b) endet, die in der zugehörigen Schale (10) im Wesentlichen senkrecht zur Platte (21) endet, und in der das andere Ende (29) der Platte (21) angeordnet ist, das von der Hitze entfernt ist, steuerbar durch die Öffnung (28a) und keine Ausstülpung auf der Schale (10) bildend.

4. Vorrichtung nach Anspruch 3, **dadurch gekennzeichnet, dass** die Drehachse (22) hinter der Vertiefung (11), die einen Haltegriff (2) aufnehmen kann, angeordnet ist.

5. Vorrichtung nach Anspruch 4, **dadurch gekennzeichnet, dass** der vordere Bereich (26a) und der hintere Bereich (26b) der Federungskammer (26) von der Drehachse (22) aus durch auseinander laufende Flächen (14, 27a, 27b) begrenzt sind.

6. Vorrichtung nach einem der Ansprüche 3 bis 5, **dadurch gekennzeichnet, dass** die elastischen Mittel eine Feder (31) aufweisen, die an der Platte (21) und am Boden einer Aufnahme (30) aufliegt, die im vorderen Bereich (26a) der Federungskammer (26) der Platte (21) endet.

7. Vorrichtung nach einem der Ansprüche 2 bis 6, **dadurch gekennzeichnet, dass** in der Verriegelungsstellung der Platte (21) die Spitze (24) im mittleren Teil der Längsöffnung (13) angebracht ist.

8. Vorrichtung nach einem der Ansprüche 2 bis 6, **dadurch gekennzeichnet, dass** die Spitze (24) auf ihrer Vorderseite eine Abfasung (25) aufweist, die das Einziehen der Spitze (24) beim Platzieren der Schale (10) auf einem Haltegriff (2) ermöglicht.

9. Vorrichtung nach einem der Ansprüche 1 bis 8, **dadurch gekennzeichnet, dass** jede Schale (10) aus zwei nebeneinander liegenden Stücken (10a, 10b) besteht, die In einer Verbindungsebene (14), die die geometrische Drehachse der Platte (21) enthält, aneinander gesetzt sind.

## Claims

1. A removable device for taking hold of, lifting, handling, and pouring from cooking utensils having two diametrically opposite outwardly-directed handles in the form of lugs (2), each of which has an opening (5) that is substantially parallel to the inner edge (6) of said lug (2), said device comprising a pair of removable shells (10) suitable for fitting over said lugs (2) and made of a thermally insulating material, each shell (10) presenting an internal cavity (11), which opens out laterally through an oblong orifice (13), which is suitable for receiving a lug (2) inserted through said orifice, **characterised by** each shell being fitted with an internal locking/unlocking device (20) suitable for co-operating with the opening (5) in the lug (2) when received in said cavity (11).

2. A device according to claim 1, **characterised by** the fact that the locking/unlocking device (20) comprises a plate (21) mounted to tilt on a pivot shaft (22) extending parallel to the oblong orifice (13) and received in a clearance chamber (26) formed inside the corresponding shell (10) and adapted to enable the plate (21) to tilt between a locking position and an unlocking position, one of the ends of said plate having a projecting catch (24) suitable for being received in the opening (5) of the lug (2) on which the corresponding shell (10) is engaged when said plate (21) is in its locking position, and the other end (29) of said plate (21) being accessible to the user to enable the user to tilt said plate (21) into its unlocking position so as to retract said catch (24) by exerting manual pressure on said other end (29) against torque exerted by resilient means (31) tending to tilt said plate (21) towards its locking position.

3. A device according to claim 2, **characterised by** the fact that the clearance chamber (26) for the plate (21) comprises a front zone (26a) opening out above the middle portion of the cavity (11), and a rear zone (26b) opening out into a through orifice (28a, 28b) formed in the corresponding shell (10) substantially perpendicularly to the plate (21), and in which the other end (29) of the plate (21) that is remote from the source of heat is engaged, said other end being controllable through the orifice (28a) and not projecting in any way from the shell (10).

4. A device according to claim 3, **characterised by** the fact that the pivot shaft (22) is situated behind the cavity (11) for receiving a lug (2).

5. A device according to claim 4, **characterised by** the fact that the front zone (26a) and the rear zone (26b) of the clearance chamber (26) are defined going away from the pivot shaft (22) by surfaces (14, 27a, 27b) that diverge.

6. A device according to any one of claims 3 to 5, **characterised by** the fact that the resilient means comprise a spring (31) bearing against the plate (21) and bearing against the end wall of a housing (30) opening out into the front zone (26a) of the clearance chamber (26) for the plate (21).

7. A device according to any one of claims 2 to 6, **characterised by** the fact that in the locking position of the plate (21), the catch (24) is disposed in the middle portion of the oblong orifice (13).

8. A device according to any one of claims 2 to 6, **characterised by** the fact that the catch (24) has a chamfer (25) on its front face enabling said catch (24) to be retracted while the shell (10) is being put into place on a lug (2).

9. A device according to any one of claims 1 to 8, **characterised by** the fact that each shell (10) is made of two parts (10a, 10b) that meet in a join plane (14) containing the pivot shaft of the plate (21).
